# EUROPÄISCHE PATENTSCHRIFT

(11) **EP 1 480 066 B1**
(45) Veröffentlichungstag und Bekanntmachung des Hinweises auf die Patenterteilung: **14.06.2006**
(21) Anmeldenummer: 04010048.9
(22) Anmeldetag: 28.04.2004
(51) Int. Cl.: G02B 21/34

(54) **Objektträger mit Markierunsbereich**
Microscope slide with marking region
Verre porte-objet avec zone de marquage

(30) Priorität: 22.05.2003 DE 10323711
(43) Veröffentlichungstag der Anmeldung: 24.11.2004
(73) Patentinhaber: Waldemar Knittel Glasbearbeitungs GmbH, 38114 Braunschweig (DE)
(72) Erfinder: Knittel, Waldemar, 38112 Braunschweig (DE)
(74) Vertreter: Lins, Edgar

(56) Entgegenhaltungen:
- DE-A- 19 812 072
- US-A- 4 679 914
- US-A- 5 598 295

## Beschreibung

Die Erfindung betrifft einen Objektträger, gebildet aus einer transparenten Glasplatte, die in einem Markierungsbereich mit einer ersten Beschichtung beschichtet ist und eine dazu kontrastierende zweite Beschichtung über der ersten Beschichtung liegend aufweist, wobei die zweite Beschichtung zum Anbringen einer Markierung durch Entfernen des Materials der zweiten Beschichtung ausgebildet ist.

Aus dem US-Patent 5,598,295 ist eine Glasplatte bekannt, die als mit einem Markierungsbereich versehener Objektträger ausgeführt ist. An einem Ende des rechteckförmigen Objektträgers ist ein Markierungsbereich vorgesehen, innerhalb dessen auf einer ersten Seite eine undurchsichtige, abkratzbare und/oder beschreibbare Beschichtung vorgesehen ist und innerhalb dessen auf einer zweiten Seite des Objektträgers eine zweite zu der ersten Beschichtung kontrastierende Beschichtung aufgebracht ist. Dabei sind die Beschichtungen genau übereinander ausgerichtet.

Die Beschichtungen sind so gefärbt, dass in der ersten Beschichtung durch Abkratzen oder Einritzen erzeugte Markierungen von der ersten Seite der Glasplatte beziehungsweise des Objektträgers aus gesehen in dem Farbton der zweiten Beschichtung erscheinen. Dabei ist die erste Beschichtung vorzugsweise in einer helleren

Farbe gehalten, wohingegen die zweite Beschichtung eine dunklere Farbgebung aufweist. Der Nachteil dieses Objektträgers liegt darin, dass zur Herstellung des Markierungsbereiches eine beidseitige Behandlung des Objektträgers vorgenommen werden muss.

Durch US 5,154,448 ist es bekannt, Behälter mit einem Etikett zu bekleben, das aus mehreren Schichten gebildet ist, von denen sich die obere Schicht, beispielsweise mit einem Fingernagel abkratzen lässt, sodass eine Kennzeichnung des Behälters auch ohne ein geeignetes Schreibgerät möglich ist. Das Aufkleben eines aus mehreren Schichten gebildeten Etiketts ist jedoch umständlich. Darüber hinaus führt eine mit einem Fingernagel entfernbare obere Schicht des Etiketts beim längeren Gebrauch, wie er bei Objektträgern möglich ist, zu einem Verkratzen der Markierung, sodass diese nach längerem Gebrauch möglicherweise nicht mehr eindeutig erkennbar ist. Die oben beschriebenen Beschichtungen des Objektträgers sind daher vorzuziehen.

Der Erfindung liegt daher die Aufgabe zugrunde, den Herstellungsprozess des eingangs genannten Objektträgers hinsichtlich einer Oberflächenbehandlung vor dem jeweiligen Aufbringen der Beschichtungen einfacher zu gestalten.

Die Aufgabe wird dadurch gelöst, dass bei einem Objektträger der eingangs genannten Art beide Beschichtungen auf einer Seite der Glasplatte angebracht sind, wobei die zweite Beschichtung über der ersten Beschichtung liegt und dass wenigstens die Oberfläche der ersten Beschichtung gegenüber dem Anbringen der Markierung an der zweiten Beschichtung widerstandsfähig ausgebildet ist.

Erfindungsgemäß sind die beiden einer Sichtbarmachung einer Markierung dienenden Beschichtungen auf derselben Seite des Objektträgers vorgesehen. Dabei wird eine auf der ersten Beschichtung durch einen Abtragvorgang wie etwa ein Abkratzen vorgesehene Markierung von der durch den Vorgang des Anbringens der Markierung nicht beeinträchtigbaren zweiten Beschichtung sichtbar gemacht. Erfolgt die Markierung etwa mit einem Pinsel oder einem Stift, so ist diese über einen Kontrast des Geschriebenen zu der ersten Beschichtung wahrnehmbar.

Die Erfindung bringt den Vorteil mit sich, dass die erfindungsgemäßen Objektträger hinsichtlich möglicher Beschädigungen einfacher gelagert und/oder verpackt werden können. Darüber hinaus ergibt sich der Vorteil, dass die in der Regel zu mehreren aus einer großen Tafel hergestellten Objektträger von der nicht beschichteten Seite der Scheibe her gut aus dieser herausgeschnitten beziehungsweise die fertigen Objektträger selber an der nicht beschichteten Seite gut geschnitten werden können.

Der Objektträger kann so ausgeführt sein, dass die Markierung über ein Abtragen, vorzugsweise ein Abkratzen der zweiten Beschichtung, das vorzugsweise mit einem harten Werkzeug erfolgen kann, anbringbar ist. Die erste und die zweite Beschichtung können auch elektromagnetische Strahlung zu einander unterschiedlicher Wellenlängen absorbieren. Dadurch kann ein selektives Abtragen der zweiten Beschichtung bei entsprechender Energiedichte einer lediglich von der zweiten Beschichtung absorbierten elektromagnetischen Strahlung erfolgen.

Die Markierung ist vorzugsweise über ein Abtragen der zweiten Beschichtung mit einem für diese Beschichtung selektiven Lichtstrahl, vorzugsweise einem LaserStrahl, anbringbar. Dabei ist die erste Beschichtung dann nicht in dem gleichen Wellenlängenbereich absorbierend und damit auch nicht schmelzbar. Die erste Beschichtung ist beispielsweise in einem Resonanzbereich hoher Lichtenergie absorbierend ausgebildet. Auch kann die erste Beschichtung eine ausreichend hohe Wärmeleitfähigkeit aufweisen, sodass es bei einer Bestrahlung etwa mit einem Laserstrahl nicht zu einer lokalen, zu einem Aufschmelzen beziehungsweise Verdampfen führenden Erwärmung kommt.

Der Objektträger enthält vorzugsweise Glas als Grundmaterial und eine eine einbrennbare Epoxid-Farbe enthaltende zweite Beschichtung. Vorzugsweise kann die erste Beschichtung Farbpigmente enthalten und eine aufgeraute Oberfläche aufweisen, die mit einem Schreibstift zum Erzeugen der Markierung beschreib- oder bedruckbar ist. Bevorzugt ist wenigstens die erste Beschichtung undurchsichtig, noch weiter bevorzugt ist auch die zweite Beschichtung undurchsichtig. Dadurch wird eine durch eine Materialentfernung erzeugte Markierung deutlich hervorgehoben. Ferner ist diese dann nur von einer, der Aufnahme eines Objektes dienenden Seite des Objektträgers wahrnehmbar und dient somit der Kenntlichmachung der Ober- und Unterseite des Objektträgers.

Bei einer weiteren Ausführungsform umfasst die erste Beschichtung eine mit einer Deckschicht überzogene Grundschicht, wobei die Deckschicht gegenüber dem Abtragvorgang des Materials der zweiten Beschichtung beständig beziehungsweise widerstandsfähig ist, d.h. direkt nicht oder nur wenig abgetragen wird. Dabei kann die Deckschicht farblos und/oder durchsichtig sein, also etwa in Form eines harten, die Grundschicht schützenden Klarlackes ausgeführt sein. Die Grundschicht dient dann lediglich der Erzeugung eines optischen Kontrastes zur Sichtbarmachung einer durch Entfernen der zweiten Beschichtung aufgebrachten Markierung und muss selber nicht hart sein. Die erste und die zweite Beschichtung sind vorzugsweise chemisch beständig.

Um nicht abgekratzt und/oder angeschmolzen zu werden, umfasst die erste Beschichtung ein granulares Material. Besonders bevorzugt ist das granulare Material ein Glasmehl. Die erste Beschichtung kann weitere organische Farb-Komponenten und einen Haftvermittler zum Erzeugen einer guten Haftung auf dem Objektträger enthalten. Die erste Beschichtung kann eine Siebdruckfarbe enthalten, beispielsweise bei einer in einem weissen Farbton gehaltenen zweiten Beschichtung rötlich sein.

Erfindungsgemäß kann die erste Beschichtung beispielsweise durch ultraviolettes Licht und/oder durch thermische Behandlung wenigstens an einer Grenzfläche zur zweiten Beschichtung ausgehärtet sein, um die Widerstandsfähigkeit gegen die Entfernung des Materials der zweiten Beschichtung zu gewährleisten. Die erste Beschichtung kann aber auch durch Selbstaushärtung durchgehend hart ausgeführt sein.

Die Erfindung wird nachfolgend anhand von Ausführungsbeispielen im Zusammenhang mit den begleitenden, in unterschiedlichen Maßstäben gehaltenen Zeichnungen näher dargestellt. Dabei ist:
- **Figur 1**: eine perspektivische Ansicht einer ersten Ausführungsform des erfindungsgemäßen Objektträgers und
- **Figur 2**: eine Seitenansicht entlang einer Längsseite einer zweiten Ausführungsform des erfindungsgemäßen Objektträgers.

Ein erfindungsgemäßer Objektträger 1 für die Mikroskopie oder Analytik weist an einem Ende 1 a einen Markierungsbereich 1 b auf. In dem Markierungsbereich 1 b ist auf einer ersten, einer Aufnahme eines mikroskopisch zu untersuchenden Objektes dienenden, Seite 2 des rechteckigen Objektträgers 1 eine zweite Beschichtung 4 über einer ersten Beschichtung 3 liegend vorgesehen. Die einseitig freiliegende zweite Beschichtung 4 ist als Mehrkomponenten-Epoxidharzfarbe ausgeführt.

Von einer parallel zu der ersten Seite 2 liegenden zweiten Seite 5 des Objektträgers 1 aus gesehen wird die zweite undurchsichtige Beschichtung 4 durch die erste ebenfalls undurchsichtige Beschichtung 3 abgedeckt. Die erste Beschichtung 3 ist farblich zu der zweiten Beschichtung 4 kontrastierend ausgeführt. Die erste Beschichtung 3 enthält Glasmehl und einen für Glas selektiven Haftvermittler. Die nach einem Farbdruckverfahren aufgebrachte erste Beschichtung 3. wird mit Hilfe von ultraviolettem (UV)-Licht gehärtet, wobei das Glasmehl zusammenwächst und sich verfestigt. Bei der dabei stattfindenden vertikalen Vernetzung dringen Farbpigmente zwischen das Glasmehl, um der ersten Beschichtung eine bestimmte homogene Farbgebung zu vermitteln.

Die auf die erste Beschichtung 3 aufgebrachte zweite Beschichtung 4 wird nach dem Aufbringen in Form eines Farbdruckprozesses in einem Einbrennofen eingebrannt.

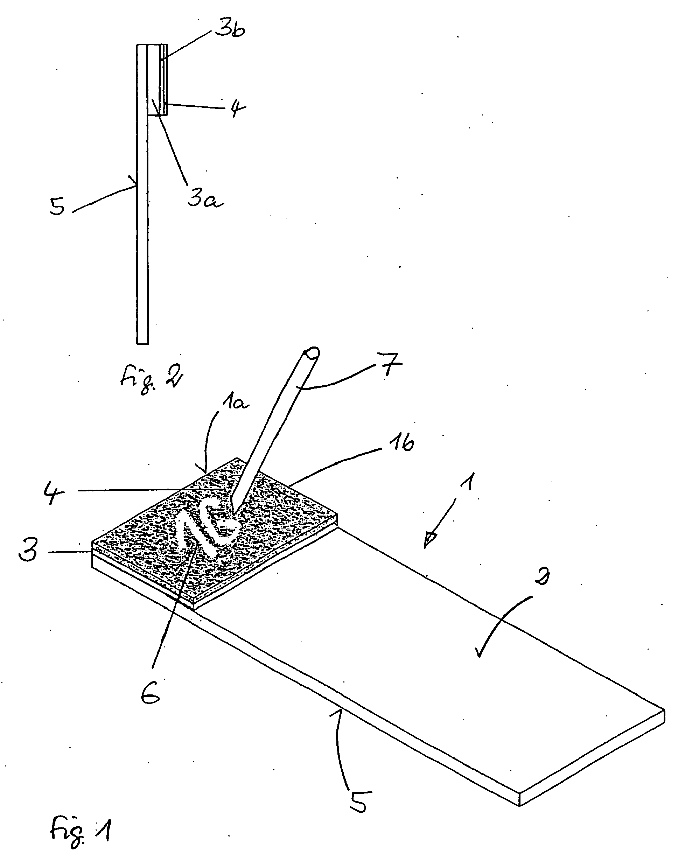

Der insbesondere für ein Lichtmikroskop ausgeführte Objektträger 1, wird wie in Figur 1 veranschaulicht in dem Markierungsbereich 1 b mit einer Markierung 6 versehen, in dem unter Einsatz eines harten Stiftes 7 die zweite Beschichtung 4 von der ersten Beschichtung 3 abgekratzt wird, wobei jedoch die erste Beschichtung 3 nicht abgetragen wird.

Bei der Ausführungsform nach Figur 2 ist die erste Beschichtung 3 in eine Grundschicht 3a und eine Deckschicht 3b unterteilt. Die Deckschicht 3b ist dabei härter als die Grundschicht und härter als die zweite Beschichtung 4, sodass sie bei einer Erzeugung einer Markierung durch ein Kratzen mit dem harten Stift nicht entfernt wird.

## Patentansprüche

1. Objektträger, gebildet aus einer transparenten Glasplatte (1), die in einem Markierungsbereich (1 b) mit einer ersten Beschichtung (3) beschichtet ist und eine dazu kontrastierende zweite Beschichtung (4) über der ersten Beschichtung (3) liegend aufweist, wobei die zweite Beschichtung (4) zum Erzengen einer Markierung (6) durch Entfernen des Materials der zweiten Beschichtung (4) ausgebildet ist, **dadurch gekennzeichnet, dass** beide Beschichtungen auf derselben Seite (2) der Glasplatte (1) angebracht sind, wobei die zweite Beschichtung (4) auf der ersten Beschichtung (3) liegt und dass wenigstens die Oberfläche der ersten Beschichtung (3) gegenüber dem Markierungsvorgang (6) an der zweiten Beschichtung (4) widerstandsfähig ausgebildet ist.

2. Objektträger nach Anspruch 1, **dadurch gekennzeichnet, dass** die erste Beschichtung (3) eine mit einer Deckschicht (3b) überzogene Grundschicht (3a) umfasst, und dass die Deckschicht (3b) gegenüber dem Anbringen der Markierung (6) widerstandsfähig ist.

3. Objektträger nach Anspruch 1 oder 2, **dadurch gekennzeichnet, dass** die zweite Beschichtung (4) zum Anbringen der Markierung (6) abtragbar, insbesondere abkratzbar ist.

4. Objektträger nach einem der Ansprüche 1 bis 3, **dadurch gekennzeichnet, dass** die erste und die zweite Beschichtung (3, 4) elektromagrietische Strahlung zu einander unterschiedlicher Wellenlängen absorbieren.

5. Objektträger nach einem der Ansprüche 1 bis 4, **dadurch gekennzeichnet, dass** die erste Beschichtung (3) durch ultraviolettes Licht ausgehärtet ist.

6. Objektträger nach einem der Ansprüche 1 bis 5, **dadurch gekennzeichnet, dass** die erste Beschichtung (3) selbstaushärtend oder thermisch ausgehärtet ist.

7. Objektträger nach einem der Ansprüche 1 bis 6, **dadurch gekennzeichnet, dass** die erste Beschichtung (3) ein granulares Material enthält.

8. Objektträger nach einem der Ansprüche 1 bis 7, **dadurch gekennzeichnet, dass** die zweite Beschichtung (4) eine einbrennbare Epoxidharz-Farbe umfasst.

9. Objektträger nach einem der Ansprüche 1 bis 8, **dadurch gekennzeichnet, dass** die zweite Beschichtung (4) eine aufgeraute Oberfläche aufweist.

10. Objektträger nach einem der Ansprüche 1 bis 9, **dadurch gekennzeichnet, dass** die erste und die zweite Beschichtung (3, 4) undurchsichtig ist.

## Claims

1. Microscope slide formed from a transparent glass plate (1) which is coated with a first coating (3) in a marking region (1b) and has a second coating (4) contrasting therewith lying over the first coating (3); the second coating (4) being designed to generate a marking (6) by removing the material of the second coating (4), **characterized in that** the two coatings are applied on the same side (2) of the glass plate (1), the second coating (4) lying on the first coating (3), and **in that** at least the surface of the first coating (3) is designed so that it is resistant to the marking process (6) on the second coating (4).

2. Microscope slide according to Claim 1, **characterized in that** the first coating (3) comprises a base layer (3a) covered with a cover layer (3b), and **in that** the cover layer (3b) is resistant to the application of the marking (6).

3. Microscope slide according to Claim 1 or 2, **characterized in that** the second coating (4) can be eroded, in particular scratched off, in order to apply the marking (6).

4. Microscope slide according to one of Claims 1 to 3, **characterized in that** the first and second coatings (3, 4) absorb electromagnetic radiation at different wavelengths from each other.

5. Microscope slide according to one of Claims 1 to 4, **characterized in that** the first coating (3) is cured by ultraviolet light.

6. Microscope slide according to one of Claims 1 to 5, **characterized in that** the first coating (3) is self-curing or thermally cured.

7. Microscope slide according to one of Claims 1 to 6, **characterized in that** the first coating (3) contains a granular material.

8. Microscope slide according to one of Claims 1 to 7, **characterized in that** the second coating (4) comprises an epoxy resin dye which can be burnt in.

9. Microscope slide according to one of Claims 1 to 8, **characterized in that** the second coating (4) has a roughened surface.

10. Microscope slide according to one of Claims 1 to 9, **characterized in that** the first and second coatings (3, 4) are opaque.

## Revendications

1. Porte-objet, réalisé en une plaque de verre transparente (1) qui est revêtue dans une zone de marquage (1b) par un premier revêtement (3) et qui présente un deuxième revêtement (4) contrasté par rapport au premier revêtement (3), et qui s'étend sur celui-ci, le deuxième revêtement (4) étant réalisé pour obtenir un marquage (6) après enlèvement de la matière du deuxième revêtement, (4) **caractérisé en ce que** les deux revêtements sont appliqués sur la même face (2) de la plaque de verre (1), le deuxième revêtement (4) s'étendant sur le premier revêtement (3) et **en ce qu'**au moins la surface supérieure du premier revêtement (3) est réalisée pour résister à l'égard de l'opération de marquage effectuée sur le deuxième revêtement (4).

2. Porte-objet selon la revendication 1, **caractérisé en ce que** le premier revêtement (3) comporte une couche de base (3a) sur laquelle est tendue une couche de couverture (3b) et **en ce que** la couche de couverture (3b) est résistante à l'égard de l'application du marquage (6).

3. Porte-objet selon la revendication 1 ou 2, **caractérisé en ce que** le deuxième revêtement (4) est détachable pour l'application du marquage (6), en particulier grattable.

4. Porte-objet selon l'une des revendications 1 à 3, **caractérisé en ce que** le premier et le deuxième revêtement (3,4) absorbent des rayonnements électromagnétiques présentant des longueurs d'onde différentes l'un par rapport à l'autre.

5. Porte-objet selon l'une des revendications 1 à 4, **caractérisé en ce que** le premier revêtement (3) est durci par de la lumière ultra-violette.

6. Porte-objet selon l'une des revendications 1 à 5, **caractérisé en ce que** le premier revêtement (3) est durci de façon autonome ou thermiquement.

7. Porte-objet selon l'une des revendications 1 à 6, **caractérisé en ce que** le premier revêtement (3) renferme une matière granulaire.

8. Porte-objet selon l'une des revendications 1 à 7, **caractérisé en ce que** le deuxième revêtement (4) comprend une couleur à base de résine époxy pouvant être cuite.

9. Porte-objet selon l'une des revendications 1 à 8, **caractérisé en ce que** le deuxième revêtement (4) comporte une surface supérieure rugueuse.

10. Porte-objet selon l'une des revendications 1 à 9, **caractérisé en ce que** le premier et le deuxième revêtements (3, 4) sont opaques.
